# FASCICULE DE BREVET EUROPEEN

(11) **EP 1 094 960 B1**
(45) Date de publication et mention de la délivrance du brevet: **03.12.2003**
(21) Numéro de dépôt: 99918031.8
(22) Date de dépôt: 07.05.1999
(51) Int. Cl.: B60K 17/356

(54) **VEHICULE AUTOMOBILE A GENERATEURS MECANIQUE ET ELECTRIQUE**
KRAFTFAHRZEUG MIT GENERATOREN MECHANISCHER UND ELEKTRISCHER ENERGIE
MOTOR VEHICLE WITH MECHANICAL AND ELECTRIC GENERATORS

(30) Priorité: 20.05.1998 FR 9806411
(43) Date de publication de la demande: 02.05.2001
(73) Titulaire: Guimbretiere, Pierre, 78640 Neauphle-Le-Château (FR)
(72) Inventeur: Guimbretiere, Pierre, 78640 Neauphle-Le-Château (FR)
(74) Mandataire: Domenego, Bertrand
(86) Numéro de dépôt international: FR9901094
(87) Numéro de publication internationale: WO99060190

(56) Documents cités:
- EP-A- 0 224 144
- EP-A- 0 839 683
- WO-A-91/08122
- FR-A- 2 461 610
- FR-A- 2 742 100
- FR-A- 2 742 703
- CHEBIL H: "NEXT, LA PROCHAINE GENERATION DE VEHICULES?" REVUE TECHNIQUE AUTOMOBILE, vol. 51, no. 584, 1 mai 1996, pages LXII-LXIV, XP000599797

## Description

La présente invention concerne un véhicule automobile comprenant au moins deux essieux, un générateur d'énergie mécanique relié mécaniquement à un premier des essieux pour l'entraîner, et des moyens de transformation d'énergie mécanique produite par le générateur d'énergie mécanique en énergie électrique.

Le générateur d'énergie mécanique est généralement un moteur thermique mais peut également être une turbine à gaz. Les moyens de transformation d'énergie mécanique en énergie électrique sont classiquement constitués par un alternateur électrique de puissance généralement comprise entre 1 et 1,5 kW. Un tel alternateur alimente, par l'intermédiaire d'un redresseur, une batterie d'accumulation d'énergie électrique sous 12 V. Cette batterie alimente elle-même divers équipements électriques du véhicule automobile tels que les projecteurs, les bougies et les moteurs d'essuie-glace.

Par ailleurs, les véhicules comprennent également un démarreur, qui est un moteur électrique.destiné à être alimenté en courant par la batterie de 12 V, et dont l'arbre de sortie peut entraîner le vilebrequin du moteur thermique en rotation.

Les besoins en énergie électrique dans les véhicules automobiles ont tendance à augmenter du fait notamment de l'apparition de nouveaux équipements. Pour répondre à ces nouveaux besoins, on a proposé de remplacer l'alternateur et le démarreur, généralement distincts dans les véhicules automobiles, par une seule machine électrique réversible formant un alternateur-démarreur, de rendement relativement plus élevé d'ailleurs.

Le rotor de cette machine électrique réversible est, par exemple, porté par le volant du moteur. Une telle machine électrique, dont la puissance peut atteindre 10 kW, est alors associée à une batterie plus puissante que les batteries de 12 V qui équipent classiquement les véhicules automobiles.

On a également proposé que cette machine électrique réversible, alimentée en énergie électrique par la nouvelle batterie et fonctionnant en moteur, puisse fournir une puissance mécanique additionnelle au premier essieu entraîné par le moteur thermique. Cette puissance mécanique additionnelle améliore le fonctionnement des véhicules automobiles, par exemple en facilitant les démarrages en côte du véhicule ou les dépassements.

Le document EP-A-0 839 683 montre un véhicule selon le préambule de la revendication 1.

WO-91/08 122 décrit un véhicule automobile comprenant deux essieux, un moteur thermique relié par une chaîne cinématique à l'essieu avant pour l'entraîner, une machine électrique réversible capable de transformer l'énergie produite par le moteur thermique en énergie électrique pour la stocker dans un accumulateur. Un moteur électrique alimenté par l'accumulateur peut entraîner l'essieu arrière. La machine électrique réversible, lorsqu'elle fonctionne en moteur, assure l'actionnement d'une pompe de direction sans entraîner la chaîne cinématique et donc l'essieu avant.

L'invention a pour but d'améliorer encore le fonctionnement général des véhicules automobiles en augmentant notamment l'efficacité de la puissance d'entraînement fournie à ces véhicules, et les performances et l'agrément de conduite de ces véhicules.

A cet effet, l'invention a pour objet un véhicule selon la revendication 1, ainsi qu'un procédé de fonctionnement selon la revendication 14.

Selon des modes particuliers de réalisation, le véhicule peut comprendre l'une ou plusieurs des caractéristiques suivantes, prises isolément ou selon toutes les combinaisons techniquement possibles :
- les moyens de transformation d'énergie mécanique en énergie électrique comprennent une machine électrique formant un générateur ;
- la machine électrique forme un alternateur et comprend un rotor relié mécaniquement au moteur thermique ;
- ladite machine électrique est une machine électrique réversible formant un générateur-moteur, et les moyens de transfert d'énergie électrique comprennent au moins un accumulateur d'énergie électrique ;
- les moyens de transfert d'énergie électrique comprennent, d'une part, une unité électronique de transfert d'énergie électrique adaptée pour raccorder électriquement sélectivement ladite machine électrique réversible, le ou les accumulateur(s) et les moyens électriques d'entraînement du deuxième essieu, et, d'autre part, une unité électronique de pilotage de cette unité de transfert d'énergie électrique ;
- le véhicule comprend des capteurs d'informations relatives au fonctionnement du véhicule et d'instructions du conducteur, ces capteurs étant raccordés à l'unité électronique de pilotage, et l'unité électronique de pilotage est adaptée pour piloter l'unité de transfert d'énergie électrique en fonction de ces informations ;
- les moyens électriques d'entraînement du deuxième essieu comprennent un moteur et un différentiel raccordé mécaniquement à l'arbre de sortie de ce moteur et aux deux roues du deuxième essieu pour entraîner ces dernières ;
- les moyens électriques d'entraînement du deuxième essieu comprennent deux moteurs sensiblement centraux, dont les arbres de sortie sont reliés mécaniquement chacun à une roue du deuxième essieu ;
- les moyens électriques d'entraînement du deuxième essieu comprennent deux moteurs latéraux, dont les arbres de sortie sont reliés mécaniquement chacun à une roue du deuxième essieu, chacun des moteurs étant disposé à proximité de moyens de support de la roue correspondante ;
- le ou chaque moteur des moyens électriques d'entraînement du deuxième essieu est une machine électrique réversible formant un générateur-moteur ;
- la ou chaque machine électrique réversible des moyens électriques d'entraînement du deuxième essieu forme un alternateur-moteur ; et
- le premier essieu est l'essieu avant du véhicule.

L'invention sera mieux comprise à la lecture de la description qui va suivre, donnée uniquement à titre d'exemple, et faite en se référant aux dessins annexés, sur lesquels :
- la figure 1 est une vue schématique illustrant un véhicule automobile selon l'invention,
- les figures 2 à 5 sont des vues schématiques partielles illustrant différents modes de fonctionnement du véhicule de la figure 1, et
- les figures 6 et 7 sont des vues schématiques partielles illustrant chacune l'essieu arrière d'un véhicule automobile selon une variante de l'invention.

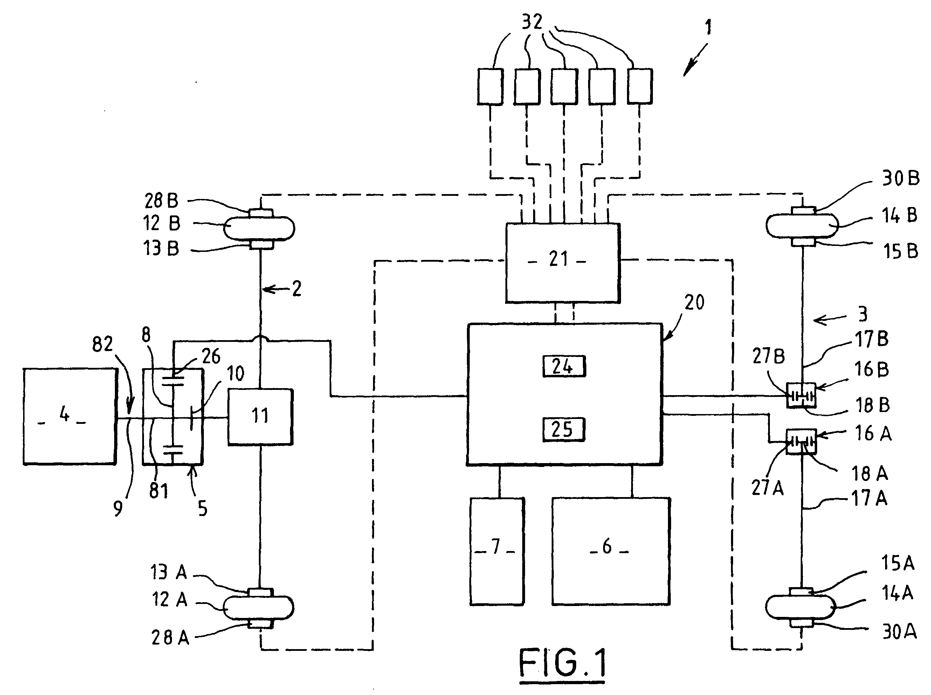

La figure 1 illustre un véhicule automobile 1 qui comprend essentiellement :
- un essieu avant 2 et un essieu arrière 3,
- un moteur thermique 4,
- une machine électrique réversible 5 formant un alternateur-moteur,
- une batterie principale 6 d'accumulation d'énergie électrique sous 100 V, et
- une batterie auxiliaire 7 d'accumulation d'énergie électrique sous 12 V.

La batterie principale 6 peut, par exemple, débiter 7,5 kW en continu et 15 kW en pointe.

Le moteur thermique 4 est par exemple un moteur développant 100 kW à 5500 tr/mn.

La machine électrique réversible 5 comprend un rotor 8 solidaire d'une partie 81 d'une chaîne cinématique 82 reliant mécaniquement le vilebrequin 9 du moteur 4 à l'essieu avant 2.

Cette chaîne cinématique comprend successivement depuis le vilebrequin 9, le volant (non-représenté) du moteur 4, la partie 81 solidaire du rotor 8, un embrayage à friction 10, et un ensemble 11 de boîte de vitesses/pont avant. De manière plus générale, l'embrayage 10 est un embrayage qui peut être rappelé mécaniquement en position de fermeture de sorte que le moteur 4 est relié mécaniquement à l'essieu avant 2 par l'intermédiaire de la chaîne cinématique 82.

Ainsi, le rotor 8 est solidaire en rotation du vilebrequin 9 et peut être solidaire en rotation de l'essieu avant 2.

Dans une variante non représentée, la chaîne cinématique 82 pourrait comprendre également un embrayage du même type que l'embrayage 10 entre le rotor 8 et le vilebrequin 9.

L'essieu avant 2 comprend une roue avant gauche (en bas sur la figure 1) 12A portée par un support de roue 13A, et une roue avant droite (en haut sur la figure 1) 12B, portée par un support de roue 13B. Ces deux roues 12A et 12B sont reliées mécaniquement à l'ensemble 11 de pont avant/boîte de vitesse.

L'essieu arrière 3 comprend une roue arrière gauche 14A, portée par un support de roue 15A, et une roue arrière droite 14B, portée par un support de roue 15B.

Le véhicule comprend en outre deux machines électriques 16A et 16B réversibles formant chacune un alternateur-moteur associé à la roue arrière 14A, 14B. Chaque machine électrique réversible 16A, 16B comprend un arbre de sortie 17A, 17B solidaire d'un rotor 18A, 18B de la machine et relié mécaniquement à la roue 14A, 14B correspondante. Les machines 16A et 16B sont disposées dans une position centrale par rapport aux roues 14A et 14B.

Le véhicule automobile 1 comprend en outre une unité électronique 20 de transfert d'énergie électrique et une unité électronique 21 de pilotage de l'unité 20 raccordée à cette dernière.

L'unité électronique 21 comprend un microprocesseur convenablement programmé.

L'unité 20 de transfert d'énergie électrique comprend en particulier un circuit onduleur 24 et un circuit redresseur 25. Cette unité 20, réalisée à partir d'éléments d'électronique de puissance, est raccordée électriquement au stator 26 de la machine électrique réversible 5, aux stators 27A et 27B des machines électriques réversibles 16A et 16B et aux batteries principale 6 et auxiliaire 7.

Des capteurs 28A, 28B, 30A et 30B d'informations relatives aux vitesses de rotation respectives des roues 12A, 12B, 14A, 14B sont reliées à l'unité électronique de pilotage 21. Ces capteurs 28A, 28B, 30A et 30B sont, par exemple, les capteurs électroniques disponibles dans les systèmes de frein dits ABS.

Des capteurs 32 (dont cinq sont représentés) d'informations relatives au comportement du véhicule 1 et à des instructions du conducteur sont également reliés à l'unité de pilotage 21.

Ces capteurs 32 sont relatifs, par exemple, au régime du moteur thermique 4, à sa température, à l'accélération transversale du véhicule, au rapport de vitesse sélectionné, à l'état et/ou à la commande de l'embrayage, de la commande des freins et de la commande d'accélération...

Ces capteurs peuvent être des capteurs présents à d'autres fins sur le véhicule automobile 1.

L'unité 20 de transfert d'énergie électrique est adaptée pour raccorder électriquement sélectivement, par l'intermédiaire ou non des circuits onduleur 24 ou redresseur 25, les machines électriques réversibles 5, 16A et 16B et les batteries 6 et 7 en fonction d'instructions envoyées par l'unité électronique de pilotage 21. Celle-ci détermine ces instructions à partir des informations captées par les capteurs 28A, 28B, 30A, 30B et 32 et, par exemple, de tables de pilotage stockées en mémoire dans l'unité électronique de pilotage 21.

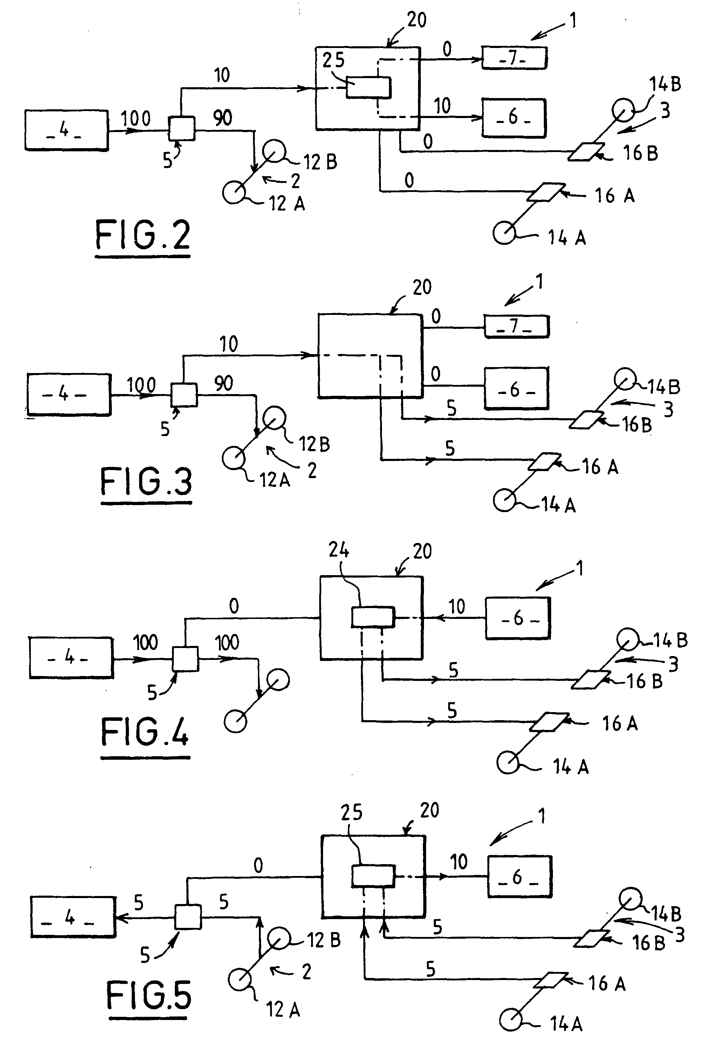

Les figures 2 à 5 illustrent plusieurs modes de fonctionnement du véhicule 1.

Dans ce qui suit, on supposera, pour faciliter la description, que les pertes, notamment dans les machines électriques réversibles 5, 16A et 16B sont négligeables. En réalité, le rendement de ces machines électriques réversibles, et notamment celui de la machine 5 fonctionnant en alternateur, peut atteindre 75 %.

La figure 2 illustre un cas de charge des batteries 6 et 7 par la machine électrique 5 qui fonctionne en alternateur.

Le véhicule 1 roulant, le moteur thermique 4 fournit une puissance mécanique de 100 kW dont 90 kW sont transmis mécaniquement à l'essieu avant 2 par l'intermédiaire de l'ensemble 11 de pont avant/boîte de vitesse représenté sur la figure 1.

La machine électrique 5, fonctionnant en alternateur, transforme les 10 kW restants en puissance électrique sous forme d'un courant alternatif. L'unité 20 transmet cette puissance électrique, après redressement du courant dans le circuit redresseur 25, à la batterie principale 6 et/ou à la batterie auxiliaire 7 en assurant ainsi leur charge. Dans le cas représenté, les 10 kW de puissance électrique sont transmis intégralement à la batterie principale 6.

La figure 3 illustre un cas se distinguant de celui de la figure 2 en ce que la puissance électrique (10 kW) fournie par la machine électrique 5 est transférée directement par l'unité 20 de transfert d'énergie électrique aux machines électriques 16A et 16B qui fonctionnent chacune en moteur pour entraîner l'essieu arrière 3.

Dans le cas représenté, ces 10 kW de puissance électrique alimentent de manière identique chacune des machines électriques 16A et 16B, c'est-à-dire que chaque machine 16A, 16B reçoit 5 kW. Toutefois, la répartition de la puissance électrique entre les machines 16A et 16B peut être inégale, cette répartition étant pilotée par l'unité 21 de pilotage.

Le cas de la figure 3 permet, par exemple, de répartir entre les essieux avant 2 et arrière 3 la puissance mécanique fournie par le moteur thermique 4 en s'affranchissant des dispositifs mécaniques de transmission entre essieux avant et arrière présents sur les véhicules quatre roues motrices. Bien que les deux essieux 2 et 3 soient tous les deux moteurs dans le cas de la figure 3, le comportement du véhicule 1 reste similaire à celui d'un véhicule à un seul essieu moteur (deux roues motrices) du fait de la faible puissance fournie à l'essieu arrière 3 par rapport à celle fournie à l'essieu avant 2. De plus, l'efficacité des 100 kW de puissance fournis aux essieux 2 et 3 est supérieure à celle correspondant au cas où les 100 kW sont fournis uniquement à l'essieu avant 2, car le poids du véhicule 1 est reporté sur l'essieu arrière 3 comme expliqué également ci-après en regard de la figure 4. Ainsi, on risque moins d'amener l'essieu avant 2 au patinage que dans le cas où toute la puissance est fournie à l'essieu avant 2.

La figure 4 illustre un cas se distinguant de celui de la figure précédente en ce que toute la puissance mécanique fournie par le moteur thermique 4 est transmise mécaniquement à l'essieu avant 2, et en ce que la batterie 6 alimente en puissance électrique les machines électriques 16A et 16B qui fonctionnent chacune en moteur. Ainsi, l'unité 20 transfère de la puissance électrique (10 kW), issue de la batterie 6 sous forme de courant continu, vers les machines 16A et 16B par l'intermédiaire du circuit onduleur 24 pour alimenter ces machines 16A et 16B en courant alternatif. Chaque machine 16A, 16B reçoit dans le cas représenté 5kW.

Ce cas permet, par exemple, de faciliter le dépassement d'un autre véhicule avec l'avantage que la surpuissance de 10 kW est fournie à l'essieu arrière 3 et non à l'essieu avant 2 qui est entraîné par le moteur thermique 4. Cette caractéristique permet d'assurer une meilleure efficacité de la surpuissance transmise. En effet, l'essieu avant 2 étant principalement moteur, le poids du véhicule 1 est reporté sur l'essieu arrière 3. Ainsi, l'adhérence des roues de l'essieu arrière 3 sur la chaussée est satisfaisante et permet ainsi, d'une part, de limiter les risques de patinage au niveau de l'essieu avant 2, et, d'autre part, d'obtenir un meilleur rendement pour l'utilisation des 10 kW de surpuissance que dans le cas où ces 10 kW seraient transmis sur l'essieu avant.

Le véhicule 1 peut aussi se comporter en véhicule à quatre roues motrices. Ceci peut être assuré par des transmissions de puissance de natures analogues à celles décrites en regard de la figure 3, la valeur de la puissance mécanique fournie par le moteur thermique 4 étant par exemple de 20 kW et chaque essieu 2, 3 recevant alors une puissance de 10 kW. Ce mode de fonctionnement peut être particulièrement utile par exemple, dans le cas où le véhicule 1 roule sur de la neige ou sur du verglas.

D'autres possibilités de transfert et de répartition de puissance sont possibles, la batterie 6 alimentant par exemple à la fois les machines électriques 5, 16A et 16B qui fonctionnent toutes en moteur, ou les machines électriques 16A et 16B étant alimentées de manière mixte par la machine électrique 5 fonctionnant en alternateur et par la batterie principale 6.

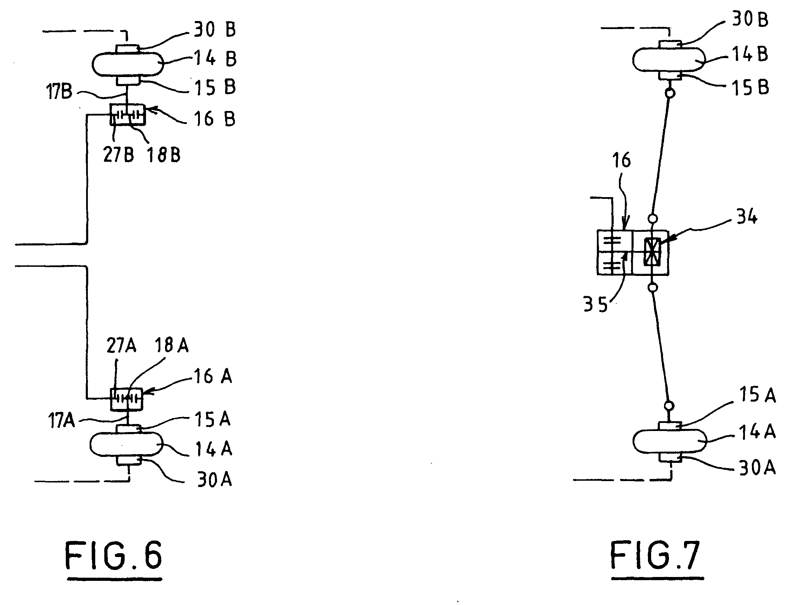

La figure 5 illustre un cas de freinage du véhicule 1 où, par exemple, 5 kW de puissance mécanique sont transmis par l'essieu avant 2 au moteur thermique 4 pour assurer un freinage par le moteur 4, et où 10 kW de puissance électrique sont prélevés sur l'essieu arrière 3 par les machines électriques 16A et 16B fonctionnant chacune en alternateur prélevant 5 kW de puissance. Ces 10 kW sont fournis, après redressement dans le circuit redresseur 25, à la batterie 6 pour la charger.

Ainsi, il est possible de ne pas équiper l'essieu arrière 3 du véhicule 1 de freins, la fonction de freinage de l'essieu arrière 3 étant assurée par les machines électriques 16A et 16B.

Selon une variante de ce mode de fonctionnement la machine électrique 5 peut également fonctionner en alternateur pour assurer seule ou en partie le freinage de l'essieu avant 2, et assurer seule ou compléter l'alimentation électrique de la batterie 6 pour la charger.

Dans un autre mode de fonctionnement où l'on souhaite produire temporairement une différence de vitesse de rotation entre, par exemple, la roue arrière gauche 14A et la roue arrière droite 14B pour modifier le comportement du véhicule 1, il est possible de freiner la roue 14A grâce à la machine électrique 16A fonctionnant en générateur, et d'accélérer la roue 14B grâce à la machine électrique 16B fonctionnant en moteur alimenté par la machine électrique 16A via l'unité 20 de transfert d'énergie électrique.

Ainsi, l'énergie électrique produite par freinage d'une roue arrière 14A ou 14B peut servir à entraîner l'autre roue arrière 14A ou 14B pour atteindre une différence de vitesses de rotation souhaitée, ce qui permet de limiter les pertes d'énergie.

Ainsi, l'invention permet d'améliorer de manière générale le fonctionnement d'un véhicule automobile de type deux roues motrices, sans modifier profondément son comportement, en autorisant de nombreuses possibilités de répartition de puissance, et en améliorant notamment l'efficacité d'une surpuissance d'entraînement fournie au véhicule.

Par ailleurs, il est possible d'assurer uniquement électriquement, grâce aux machines électriques 5 et/ou 16A et 16B, l'entraînement en marche avant du véhicule 1 aux plus faibles vitesses. Ainsi, le premier rapport de marche avant de la boîte de vitesses peut être supprimé ce qui permet de raccourcir la boîte de vitesses.

De plus, il est possible d'assurer uniquement électriquement l'entraînement du véhicule en marche arrière, grâce aux machines électriques 5 et/ou 16A et 16B. Ainsi, le rapport de marche arrière de la boîte de vitesses peut être supprimé ce qui permet une simplification de la boîte de vitesses.

Par ailleurs, la machine électrique réversible 5 alimentée en courant alternatif par la batterie 6, via le circuit onduleur 24, permet d'assurer de manière classique le démarrage du moteur thermique 4.

En outre, du fait de la liaison mécanique entre le moteur 4 et l'essieu avant 2, il est possible de démarrer le véhicule 1 « à la poussette », c'est-à-dire en poussant le véhicule 1 ou en le faisant rouler sur une pente descendante, par exemple dans le cas où les batteries 6 et 7 sont vides.

La batterie principale 6 alimente électriquement divers équipements électriques non représentés tels qu'un climatiseur, un moteur électrique de direction assistée.

La batterie auxiliaire 7 alimente électriquement d'autres équipements non représentés tels que les bougies, les projecteurs ...

Selon une variante illustrée par la figure 6, les machines électriques réversibles 16A et 16B sont suspendues aux roues 14A et 14B. Ainsi, chaque machine électrique 16A, 16B est disposée latéralement à proximité de la roue correspondante 14A, 14B et de son support 15A, 15B. Une telle variante permet de limiter le coût des transmissions mécaniques entre les arbres de sortie 17A et 17B des machines 16A et 16B et les roues 14A et 14B.

Selon une autre variante illustrée par la figure 7, les machines 16A et 16B sont remplacées par une seule machine électrique réversible 16 formant un alternateur-générateur accouplé à un différentiel 34. Ce différentiel 34 est relié mécaniquement à l'arbre de sortie 35 de cette machine 16 et aux roues 14A et 14B. Dans cette variante, la répartition de puissance entre les roues 14A et 14B peut également être pilotée par l'unité de pilotage 21 notamment à l'aide de dispositifs visco-coupleurs.

De manière plus générale, l'invention peut s'appliquer à un véhicule 1 dit à propulsion, c'est-à-dire un véhicule 1 dont l'essieu arrière 3 est entraîné mécaniquement par le moteur thermique 4, les machines électriques réversibles 16A et 16B ou 16 équipant alors l'essieu avant 2.

Enfin, les machines électriques 16A, 16B ou 16 peuvent également être uniquement des moteurs destinés à être alimentés en courant continu, et le moteur thermique 4 peut être remplacé par une turbine à gaz.

## Revendications

1. Véhicule automobile (1) comprenant au moins deux essieux (2, 3), un générateur d'énergie mécanique (4) relié mécaniquement par une chaîne cinématique (82) à un premier (2) des essieux pour l'entraîner, des moyens (5) de transformation d'énergie mécanique produite par le générateur mécanique (4) en énergie électrique, des moyens électriques (16A, 16B ; 16) d'entraînement d'au moins un deuxième essieu (3) qui sont raccordés auxdits moyens (5) de transformation par des moyens (6, 7, 20, 21) de transfert d'énergie électrique, les moyens (5) de transformation d'énergie mécanique en énergie électrique comprenant une machine électrique réversible (5) formant un générateur-moteur, et les moyens de transfert d'énergie électrique comprenant au moins un accumulateur d'énergie électrique (6, 7), la machine électrique réversible (5) étant reliée mécaniquement à la chaîne cinématique (82) pour pouvoir l'entraîner par l'intermédiaire d'un rotor (8) de ladite machine (5) accouplé à une partie (81 ) de la chaîne cinématique (82), le véhicule automobile étant **caractérisé en ce que** la chaîne cinématique (82) comprene un embrayage (10) situé entre sa partie (81) accouplée au rotor (8) de la machine électrique réversible (5) et le premier essieu (2).

2. Véhicule selon la revendication 1, dans lequel la machine électrique réversible (5) est reliée mécaniquement à la chaîne cinématique (82) pour pouvoir entraîner le générateur d'énergie mécanique (4).

3. Véhicule selon la revendication 1 ou 2, dans lequel la machine électrique réversible (5) est reliée mécaniquement à la chaîne cinématique (82) pour pouvoir entraîner le premier essieu (2).

4. Véhicule selon l'une quelconque des revendications précédentes, dans lequel la chaîne cinématique (82) comprend un embrayage situé entre le générateur d'énergie mécanique (4) et la machine électrique réversible (5).

5. Véhicule selon l'une quelconque des revendications précédentes, dans lequel les moyens de transfert d'énergie électrique comprennent, d'une part, une unité électronique (20) de transfert d'énergie électrique adaptée pour raccorder électriquement sélectivement ladite machine électrique réversible (5), le ou les accumulateur(s) (6, 7) et les moyens électriques (16A, 16B ; 16) d'entraînement du deuxième essieu (3), et, d'autre part, une unité électronique de pilotage (21) de cette unité (20) de transfert d'énergie électrique.

6. Véhicule selon la revendication 5, dans lequel le véhicule comprend des capteurs (28A, 28B, 30A, 30B, 32) d'informations relatives au fonctionnement du véhicule (1 ) et d'instructions du conducteur, ces capteurs étant raccordés à l'unité électronique de pilotage (21), et dans lequel l'unité électronique de pilotage (21) est adaptée pour piloter l'unité (20) de transfert d'énergie électrique en fonction de ces informations.

7. Véhicule selon l'une des revendications précédentes, dans lequel la chaîne cinématique (82) comprend une boîte de vitesses (11), la boîte de vitesses n'ayant pas de rapport de marche arrière.

8. Véhicule selon l'une quelconque des revendications précédentes, **caractérisé en ce que** le premier essieu est l'essieu avant (2) du véhicule (1 ).

9. Véhicule selon l'une quelconque des revendications précédentes, dans lequel les moyens électriques d'entraînement du deuxième essieu (3) comprennent un moteur (16) et un différentiel (34) relié mécaniquement à l'arbre de sortie (35) de ce moteur (16) et aux deux roues (14A, 14B) du deuxième essieu (3) pour entraîner ces dernières.

10. Véhicule selon l'une quelconque des revendications 1 à 8, dans lequel les moyens électriques d'entraînement du deuxième essieu (3) comprennent un premier et un deuxième moteurs (16A, 16B) sensiblement centraux, dont les arbres de sortie (17A, 17B) sont reliés mécaniquement respectivement à une première et à une deuxième roues (14A, 14B) du deuxième essieu (3).

11. Véhicule selon l'une quelconque des revendications 1 à 8, dans lequel les moyens électriques d'entraînement du deuxième essieu (3) comprennent un premier et un deuxième moteurs latéraux, dont les arbres de sortie (17A, 17B) sont reliés mécaniquement respectivement à une première et à une deuxième roues (14A, 14B) du deuxième essieu (3), chacun des moteurs (17A, 17B) étant disposé à proximité de moyens (15A, 15B) de support de la roue (14A, 14B) correspondante.

12. Véhicule selon l'une quelconque des revendications 9 à 11 dans lequel le ou chaque moteur (16A, 16B ; 16) des moyens électriques d'entraînement du deuxième essieu (3) est une machine électrique réversible formant un générateur-moteur.

13. Véhicule selon la revendication 12, dans lequel la ou chaque machine électrique réversible des moyens électriques d'entraînement du deuxième essieu (3) forme un alternateur-moteur.

14. Procédé de fonctionnement d'un véhicule selon la revendication 12 ou 13 prise en combinaison avec la revendication 10 ou 11, dans laquelle :
- on freine la première roue (14A) du deuxième essieu (3) grâce à la première machine électrique (16A) fonctionnant en générateur, et
- on accélère la deuxième roue (14B) du deuxième essieu (3) grâce à la deuxième machine électrique (16B) fonctionnant en moteur alimenté par la première machine électrique (16A) via les moyens (6, 7, 20, 21) de transfert d'énergie électrique.

## Patentansprüche

1. Kraftfahrzeug (1) mit wenigstens zwei Achsen (2, 3), einem Erzeuger (4) mechanischer Energie, der mechanisch über einen Antriebsstrang (82) mit einer ersten (2) der Achsen verbunden ist, um sie anzutreiben, einer Einrichtung (5) zur Umwandlung von mechanischer Energie, die durch den mechanischen Erzeuger (4) geliefert wird, in elektrische Energie, einer zum Antreiben wenigstens einer zweiten Achse (3) dienenden elektrischen Einrichtung (16A, 16B; 16), die über eine Einrichtung (6, 7, 20, 21) zur Übertragung elektrischer Energie mit der Umwandlungseinrichtung (5) verbunden ist, wobei die zur Umwandlung von mechanischer Energie in elektrische Energie dienende Einrichtung (5) eine umkehrbare elektrische Maschine (5) umfasst, die einen Motorgenerator bildet, und die zur Übertragung elektrischer Energie dienende Einrichtung wenigstens einen Akkumulator (6, 7) elektrischer Energie aufweist und die umkehrbare elektrische Maschine (5) mechanisch mit dem Antriebsstrang (82) verbunden ist, um ihn antreiben zu können, und zwar über einen Rotor (8) der Maschine (5), der mit einem Teil (81) des Antriebsstrangs (82) gekoppelt ist, wobei das Kraftfahrzeug **dadurch gekennzeichnet ist, dass** der Antriebsstrang (82) eine Kupplung (10) aufweist, die zwischen seinem mit dem Rotor (8) der umkehrbaren elektrischen Maschine (5) verbundenen Teil (81) und der ersten Achse (2) angeordnet ist.

2. Fahrzeug nach Anspruch 1, bei dem die umkehrbare elektrische Maschine (5) mechanisch mit dem Antriebsstrang (82) verbunden ist, um den Erzeuger (4) mechanischer Energie antreiben zu können.

3. Fahrzeug nach Anspruch 1 oder 2, bei dem die umkehrbare elektrische Maschine (5) mechanisch mit dem Antriebsstrang (82) verbunden ist, um die erste Achse (2) antreiben zu können.

4. Fahrzeug nach einem der vorhergehenden Ansprüche, bei dem der Antriebsstrang (82) eine Kupplung aufweist, die zwischen dem Erzeuger (4) mechanischer Energie und der umkehrbaren elektrischen Maschine (5) angeordnet ist.

5. Fahrzeug nach einem der vorhergehenden Ansprüche, bei dem die zur Übertragung elektrischer Energie dienende Einrichtung zum einen eine zur Übertragung elektrischer Energie dienende elektronische Einheit (20) aufweist, die ausgebildet ist, wahlweise die umkehrbare elektrische Maschine (5), den oder die Akkumulator(en) (6, 7) und die zum Antrieb der zweiten Achse (3) dienende elektrische Einrichtung (16A, 16B; 16) elektrisch zu verbinden, und zum anderen eine elektronische Einheit (21) zum Steuern der zur Übertragung elektrischer Energie dienenden Einheit (20) aufweist.

6. Fahrzeug nach Anspruch 5, das mit der elektronischen Steuereinheit (21) verbundene Sensoren (28A, 28B, 30A, 30B, 32) zum Erfassen von Daten bezüglich des Betriebs des Fahrzeugs (1) und von Anweisungen des Fahrers aufweist, wobei die elektronische Steuereinheit (21) ausgebildet ist, die zur Übertragung elektrischer Energie dienende Einheit (20) in Abhängigkeit von diesen Daten zu steuern.

7. Fahrzeug nach einem der vorhergehenden Ansprüche, bei dem der Antriebsstrang (82) ein Schaltgetriebe (11) aufweist, das keinen Rückwärtsgang besitzt.

8. Fahrzeug nach einem der vorhergehenden Ansprüche, **dadurch gekennzeichnet, dass** die erste Achse die Vorderachse des Fahrzeugs (1) ist.

9. Fahrzeug nach einem der vorhergehenden Ansprüche, bei dem die elektrische Antriebseinrichtung der zweiten Achse (3) einen Motor (16) und ein Differentialgetriebe (34) aufweist, das mechanisch mit der Ausgangswelle (35) des Motors (16) und mit den beiden Rädern (14A, 14B) der zweiten Achse (3) verbunden ist, um letztere anzutreiben.

10. Fahrzeug nach einem der Ansprüche 1 bis 8, bei dem die elektrische Antriebseinrichtung der zweiten Achse (3) einen ersten und einen zweiten Motor (16A, 16B) aufweist, die im wesentlichen zentral angeordnet sind und deren Ausgangswellen (17A, 17B) mechanisch mit einem ersten bzw einem zweiten Rad (14A, 14B) der zweiten Achse (3) verbunden sind.

11. Fahrzeug nach einem der Ansprüche 1 bis 8, bei dem die elektrische Antriebseinrichtung der zweiten Achse (3) einen ersten und einen zweiten seitlich angeordneten Motor aufweist, deren Ausgangswellen (17A, 17B) mechanisch mit einem ersten bzw einem zweiten Rad (14A, 14B) der zweiten Achse (3) verbunden sind, wobei die Motoren (17A, 17B) jeweils in der Nähe einer Einrichtung (15A, 15B) zur Lagerung des zugehörigen Rads (14A, 14B) angeordnet sind.

12. Fahrzeug nach einem der Ansprüche 9 bis 11, bei dem der oder jeder Motor (16A, 16B; 16) der elektrischen Antriebseinrichtung der zweiten Achse (3) eine umkehrbare elektrische Maschine ist, die einen Motor-Generator bildet.

13. Fahrzeug nach Anspruch 12, bei dem die oder jede umkehrbare elektrische Maschine der elektrischen Antriebseinrichtung der zweiten Achse (3) einen Motor-Wechselstromgenerator bildet.

14. Verfahren zum Betreiben eines Fahrzeugs nach Anspruch 12 oder 13 in Kombination mit Anspruch 10 oder 11, mit folgenden Schritten:
- das erste Rad (14A) der zweiten Achse (3) wird mittels der ersten elektrischen Maschine (16A) gebremst, die als Generator arbeitet, und
- das zweite Rad (14B) der zweiten Achse (3) wird mittels der zweiten elektrischen Maschine (16B) beschleunigt, die als Motor arbeitet, der durch die erste elektrische Maschine (16A) über die zur Übertragung elektrischer Energie dienende Einrichtung (6, 7, 20, 21) gespeist wird.

## Claims

1. Automotive vehicle (1) comprising at least two axles (2, 3), a mechanical energy generator (4) mechanically connected by a power train (82) to a first (2) of the axles for driving it, means (5) for converting mechanical energy produced by the mechanical generator (4) into electrical energy, electric means (16A, 16B; 16) for driving at least a second axle (3), which are connected to said converting means (5) by electrical energy transfer means (6, 7, 20, 21), the means (5) for converting mechanical energy into electrical energy comprising a reversible electric machine (5) forming a motor-generator, and the electrical energy transfer means comprising at least one electrical energy accumulator (6, 7), the reversible electric machine (5) being mechanically connected to the power train (82) in order to be able to drive it by means of a rotor (8) of said machine (5) coupled to a part (81) of the power train (82), the automotive vehicle being **characterised in that** the power train (82) comprises a clutch (10) located between its part (81) coupled to the rotor (8) of the reversible electric machine (5) and the first axle (2).

2. Vehicle according to claim 1, wherein the reversible electric machine (5) is mechanically connected to the power train (82) in order to be able to drive the mechanical energy generator (4).

3. Vehicle according to claim 1 or 2, wherein the reversible electric machine (5) is mechanically connected to the power train (82) in order to be able to drive the first axle (2).

4. Vehicle according to any one of the preceding claims, wherein the power train (82) comprises a clutch located between the mechanical energy generator (4) and the reversible electric machine (5).

5. Vehicle according to any one of the preceding claims, wherein the electrical energy transfer means comprise, on the one hand, an electronic unit (20) for transferring electrical energy, which is adapted to selectively electrically connect said reversible electric machine (5), the accumulator(s) (6, 7) and the electric drive means (16A, 16B; 16) of the second axle (3), and on the other hand, an electronic control unit (21) for said electrical energy transfer unit (20).

6. Vehicle according to claim 5, wherein the vehicle comprises sensors (28A, 28B, 30A, 30B, 32) for picking up data relating to the functioning of the vehicle (1) and for instructing the driver, these sensors being connected to the electronic control unit (21), and wherein the electronic control unit (21) is adapted to control the electrical energy transfer unit (20) as a function of this data.

7. Vehicle according to any one of the preceding claims, wherein the power train (82) comprises a gearbox (11), the gearbox having no reverse gear ratio.

8. Vehicle according to any one of the preceding claims, **characterised in that** the first axle is the front axle (2) of the vehicle (1).

9. Vehicle according to any one of the preceding claims, wherein the electrical drive means for the second axle (3) comprise a motor (16) and a differential (34) mechanically connected to the output shaft (35) of this motor (16) and to the two wheels (14A, 14B) of the second axle (3) in order to drive these latter.

10. Vehicle according to any one of claims 1 to 8, wherein the electric drive means for the second axle (3) comprise substantially central first and second motors (16A, 16B), the output shafts (17A, 17B) of which are mechanically connected to a first and second wheel (14A, 14B), respectively, of the second axle (3).

11. Vehicle according to any one of claims 1 to 8, wherein the electrical drive means for the second axle (3) comprise lateral first and second motors, the output shafts (17A, 17B) of which are mechanically connected to a first and second wheel (14A, 14B), respectively, of the second axle (3), each of the motors (17A, 17B) being located close to support means (15A, 15B) for the corresponding wheel (14A, 14B).

12. vehicle according to any one of claims 9 to 11, wherein the or each motor (16A, 16B) of the electrical drive means for the second axle (3) is a reversible electric machine forming a motor-generator.

13. Vehicle according to claim 12, wherein the or each reversible electric machine of the electrical drive means of the second axle (3) forms a motor-alternator.

14. Method of operating a vehicle according to claim 12 or 13, taken in conjunction with claim 10 or 11, wherein:
the first wheel (14A) of the second axle (3) is braked by means of the first electric machine (16A) operating as a generator, and
the second wheel (14B) of the second axle (3) is accelerated by means of the second electric machine (16B) operating as a motor supplied by the first electric machine (16A) via the electrical energy transfer means (6, 7, 20, 21).
